# EUROPEAN PATENT SPECIFICATION

(11) **EP 3 071 322 B1**
(45) Date of publication and mention of the grant of the patent: **23.09.2020**
(21) Application number: 14864374.5
(22) Date of filing: 19.11.2014
(51) Int. Cl.: C01B 33/035, B01J 19/08

(54) **APPARATUS FOR MANUFACTURING POLYSILICON**
VORRICHTUNG ZUR HERSTELLUNG VON POLYSILICIUM
APPAREIL POUR LA FABRICATION DE POLYSILICIUM

(30) Priority: 20.11.2013 KR 20130141533
(43) Date of publication of application: 28.09.2016
(73) Proprietor: Hanwha Chemical Corporation, Seoul 04541 (KR)
(72) Inventor: PARK, Kyu Hak, Incheon 403-827 (KR); PARK, Sung Eun, Seoul 121-030 (KR); PARK, Jea Sung, Daejeon 302-841 (KR); LEE, Hee Dong, Seoul 152-761 (KR)
(74) Representative: Alt, Michael
(86) International application number: PCT/KR2014/011142
(87) International publication number: WO 2015/076564

(56) References cited:
- WO-A1-2014/146877
- DE-A1-102010 013 043
- DE-B3-102009 021 825
- JP-A- 2013 018 675
- KR-A- 20100 117 492
- KR-A- 20130 104 041
- KR-A- 20130 104 041
- US-A1- 2010 101 494
- US-A1- 2010 147 219
- US-A1- 2011 203 101
- US-A1- 2013 011 581

## Description

### [Technical Field]

The present invention relates to an apparatus for manufacturing polysilicon, and more particularly, to an apparatus for manufacturing polysilicon including an electrode cover as defined in the claims.

### [Background Art]

Polysilicon or polycrystalline silicon is a component used as a basic material in the semiconductor industry, the solar power industry, and the like. A Siemens precipitation method using a chemical vapor deposition (CVD) reactor among methods for manufacturing polysilicon has been known.

An apparatus for manufacturing polysilicon according to the Siemens precipitation method includes a reactor cover coupled on a substrate, at least a pair of electrodes installed through the substrate, filaments coupled with the electrodes by an electrode chuck, and a connecting rod connecting upper ends of a pair of filaments. The pair of electrodes are connected with a power supply and insulated from the substrate by a bushing made of an insulating material and a space ring.

Power supplied from the power supply passes through the electrodes, the electrode chuck, the filaments, and the connecting rod and is input again to the power supply through the filaments, the electrode chuck, and the electrodes. When the power is applied, a silicon-material filament causes resistive heat at a temperature of 1000 °C or more, and when a silane-material gas and hydrogen are injected under a high-pressure condition for 60 to 80 hours, silicon is precipitated in a polycrystalline shape on the surface of the filament.

In this process, the electrode is cooled by a method such as water cooling, but an upper temperature of the electrode contacting the electrode chuck rises to 800 °C or more. Accordingly, silicon is deposited on the upper surface of the electrode and the space ring, and as a result, an insulating characteristic between the electrode and the substrate deteriorates. Further, heat loss by the electrodes is generated at the lower portion of the filament, DE102009021825 discloses an apparatus for manufacturing polysilicon, comprising: a reaction chamber including a substrate and a reactor cover; at least a pair of electrodes installed through the substrate by an insulating member and connected with a power supply; at least a pair of filaments which are coupled with the pair of electrodes by an electrode chuck and of which upper ends are connected to each other; and an electrode cover surrounding an upper surface and a side of the electrode on the substrate, wherein the electrode chuck includes a lower end covering the upper surface of the electrode cover. The electrode has a protrusion engaging with the electrode chuck formed on the upper surface; and the electrode cover includes a horizontal cover forming an opening receiving the protrusion and disposed on the upper surface of the electrode and a vertical cover vertically connected with the horizontal cover at the edge of the horizontal cover and that the horizontal cover and the vertical cover are configured separately such that they can be individually replaced. This document also discloses an electrode chuck including an upper end fixing the filaments, and a single-slope side connecting the upper end and the lower end; and the diameter of the lower end is equal to or larger than that of the electrode cover.

### [DISCLOSURE]

### [Technical Problem]

The present invention has been made in an effort to provide an apparatus for manufacturing polysilicon having advantages of maintaining an insulating characteristic of a substrate from an electrode so as to not deposit silicon on the electrode and a space ring, suppressing heat loss of filaments by the electrode, and reducing maintenance costs.

### [Technical Solution]

An exemplary embodiment disclosed hereinprovides an apparatus for manufacturing polysilicon, including: a reaction chamber including a substrate and a reactor cover; at least a pair of electrodes installed through the substrate by an insulating member and connected with a power supply; at least a pair of filaments which are coupled with the pair of electrodes by an electrode chuck and of which upper ends are connected to each other; and a cover assembly including an electrode cover surrounding an upper surface and a side of each of the pair of electrodes on the substrate and a cover shield covering the upper surface of the electrode cover

The electrode may have a protrusion engaging with the electrode chuck formed on the upper surface The electrode cover may include a horizontal cover forming an opening receiving the protrusion and disposed on the upper surface of the electrode, and a vertical cover vertically connected with the horizontal cover at the edge of the horizontal cover.

The horizontal cover and the vertical cover may be configured separately such that they can be individually replaced. The electrode cover may include any one selected from a group consisting of fused silica (SiO₂), silicon nitride (Si₃N₄), alumina (Al₂O₃), zirconia (ZrO₂), magnesia (MgO), and mullite (3Al₂O₃ · 2SiO₂).

The cover shield may form an opening receiving the protrusion and have a disk shape having a larger diameter than the horizontal cover.

The cover shield may include a first shield forming an opening receiving the protrusion and covering the upper surface of the horizontal cover, and a second shield connected with the edge of the first shield to cover the outer surface of the vertical cover. The first shield and the second shield may be configured separately such that they can be individually replaceable.

The cover shield may be made of a carbon-based material including graphite. The cover shield may be newly replaced after polysilicon is manufactured or repeatedly used as long as the cover shield does not influence the deposition of polysilicon.

An exemplary embodiment of the present invention provides an apparatus for manufacturing polysilicon, including: a reaction chamber including a substrate and a reactor cover; at least a pair of electrodes installed through the substrate by an insulating member and connected with a power supply; at least a pair of filaments which are coupled with the pair of electrodes by an electrode chuck and of which upper ends are connected to each other; and an electrode cover surrounding an upper surface and a side of the electrode on the substrate, in which the electrode chuck includes a lower end covering the upper surface of the electrode cover.

The electrode may have a protrusion engaging with the electrode chuck formed on the upper surface. The electrode cover may include a horizontal cover forming an opening receiving the protrusion and disposed on the upper surface of the electrode, and a vertical cover vertically connected with the horizontal cover at the edge of the horizontal cover.

The horizontal cover and the vertical cover may be configured separately such that they can be individually replaced. The electrode cover may include any one selected from a group consisting of fused silica (SiO₂), silicon nitride (Si₃N₄), alumina (Al₂O₃), zirconia (ZrO₂), magnesia (MgO), and mullite (3Al₂O₃ · 2SiO₂).

The electrode chuck may include a chuck part fixing the end of the filament and a shield part connected below the chuck part. A diameter of the shield part may be larger than a maximum diameter of the chuck part and equal to or larger than the diameter of the electrode cover.

The apparatus for manufacturing polysilicon may further include an auxiliary shield. The auxiliary shield may be vertically connected with the shield part at the edge of the shield part to cover the outer surface of the vertical cover. The electrode chuck and the auxiliary shield may be made of carbon-based materials including graphite, and the auxiliary shield may be detachably assembled with the shield part.

The electrode chuck may include an upper end fixing the filaments, and a single-slope side connecting the upper end and the lower end. The diameter of the lower end may be equal to or larger than that of the electrode cover.

The apparatus for manufacturing polysilicon may further include an auxiliary shield. The auxiliary shield may be vertically connected with the lower end at the edge of the lower end to cover the outer surface of the vertical cover. The electrode chuck and the auxiliary shield may be made of carbon-based materials including graphite, and the auxiliary shield may be detachably assembled with the lower end.

### [Advantageous Effects]

According to the exemplary embodiments, since polysilicon is not deposited on the electrode and the surface of the space ring in a process of manufacturing polysilicon due to an electrode cover, an insulating characteristic of the substrate from the electrode may be highly maintained. In addition, since the lower end of the cover shield or the electrode chuck according to the invention covers the upper surface of the electrode cover and thus a cleaning operation of the electrode cover may be omitted, maintenance costs of the apparatus for manufacturing polysilicon may be largely reduced.

### [Description of the Drawings]

FIG. 1 is a cross-sectional view of an apparatus for manufacturing polysilicon according to a first exemplary embodiment of the present invention.
FIG. 2 is a partially enlarged view of the apparatus for manufacturing polysilicon illustrated in FIG. 1.
FIG. 3 is an exploded perspective view of a cover assembly illustrated in FIG. 2.
FIG. 4 is a partially enlarged view of an apparatus for manufacturing polysilicon according to a second exemplary embodiment of the present invention.
FIG. 5 is a partially enlarged view of an apparatus for manufacturing polysilicon according to a third exemplary embodiment of the present invention.
FIGS. 6 and 7 are partially enlarged views of an apparatus for manufacturing polysilicon according to a fourth exemplary embodiment of the present invention.
FIGS. 8 and 9 are partially enlarged views of an apparatus for manufacturing polysilicon according to a fifth exemplary embodiment of the present invention.
FIGS. 10 and 11 are partially enlarged views of an apparatus for manufacturing polysilicon according to a sixth exemplary embodiment of the present invention.
FIGS. 12 and 13 are partially enlarged views of an apparatus for manufacturing polysilicon according to a seventh exemplary embodiment of the present invention.

### [Mode for Invention]

The present invention will be described more fully hereinafter with reference to the accompanying drawings, in which exemplary embodiments of the invention are shown. As those skilled in the art would realize, the described embodiments may be modified in various different ways, all without departing from the spirit or scope of the present invention.

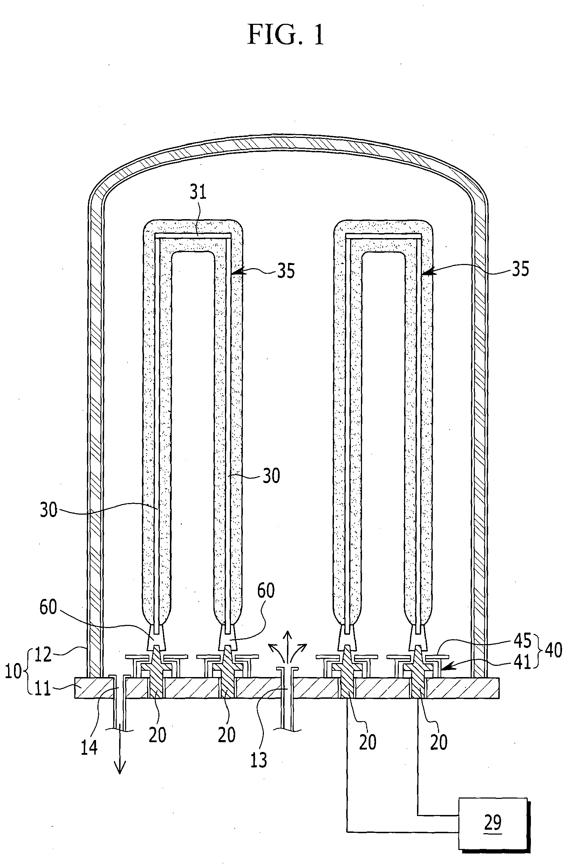

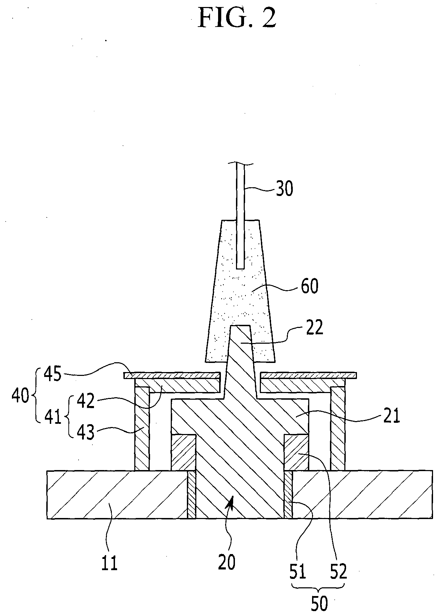

FIG. 1 is a cross-sectional view of an apparatus for manufacturing polysilicon according to a first exemplary embodiment of the present invention, and FIG. 2 is a partially enlarged view of the apparatus for manufacturing polysilicon illustrated in FIG. 1.

Referring to FIGS. 1 and 2, an apparatus 100 for manufacturing polysilicon 100 is configured by a chemical vapor deposition (CVD) reactor provided with heatable silicon filaments. In detail, the apparatus 100 for manufacturing polysilicon includes a reaction chamber 10, at least one pair of electrodes 20, at least one pair of filaments 30, and a plurality of cover assemblies 40.

The reaction chamber 10 is configured by a substrate 11 (alternatively, a base plate), and a reactor cover 12 installed on the substrate 11. The reactor cover 12 may have a bell shape and be formed with by a double-wall structure in which a cooling fluid flows. The reactor cover 12 is assembled on the substrate 11 by a gas-sealed flange (not illustrated).

A gas inlet 13 and a gas outlet 14 are formed in the substrate 11. A silane-based material gas (e.g., trichlorosilane (SiHCl₃)) flows into the reaction chamber 10 through the gas inlet 13, and a gas subjected to the CVD reaction is discharged to the outside of the reaction chamber 10 through the gas outlet 14. Further, a plurality of openings for installing the electrode 20 are formed in the substrate 11.

Both the substrate 11 and the electrode 20 are made of metals and thus the electrode 20 is installed through the substrate 11 with an insulating member 50 to maintain insulation from the substrate 11. The insulating member 50 may be configured by a bushing 51 and a space ring 52.

The bushing 51 may be made of a heat-resistance resin such as a tetrafluoroethylene resin as a cylindrical ring surrounding the electrode 20 in the opening of the substrate 11. The space ring 52 may be made of a ceramic as a cylindrical ring surrounding the electrode 20 on the substrate 11. The bushing 51 and the space ring 52 separately insulate the electrode 20 and the substrate 11 in a planar direction of the substrate 11 and a thickness direction of the substrate 11, respectively.

The electrode 20 may have a T-shaped cross-section in which a flange 21 is formed on the space ring 52, and a protrusion 22 for engaging with an electrode chuck 60 may be formed on the upper surface of the electrode 20. The electrode chuck 60 fixes an end of the filament 30 and is coupled with the protrusion 22 of the electrode 20 to fix the filament 30 to the electrode 20. The electrode chuck 60 is made of a conductive material such as graphite to electrically connect the electrode 20 and the filament 30.

The pair of filaments 30 are installed in the pair of electrodes 20, respectively. The pair of filaments 30 are positioned to be perpendicular to the substrate 11 in the reaction chamber 10 and are electrically connected to each other by a connecting rod 31 fixed on the upper end thereof. The filaments 30 and the connecting rod 31 are made of silicon. A plurality of sets of rod filaments 35 constituted by the pair of filaments 30 and one connecting rod 31 are provided in the reaction chamber 10.

In FIG. 1, two sets of rod filaments 35 are illustrated as an example, but actually, more than two sets of rod filaments 35 are positioned in the reaction chamber 10.

The pair of electrodes 20 is connected to a power supply 29 and one set of rod filaments 35 form one electrical circuit. Accordingly, when a current flows to the filaments 30 through the electrode 20, the filaments 30 and the connecting rod 31 are resistance-heated at a high temperature of 1000 °C or more, and when the silane-based material gas and hydrogen are injected for 60 hours or more under a high-pressure condition, silicon is precipitated in a polycrystalline form on surfaces of the heated filaments 30 and the connecting rod 31. That is, polysilicon is formed on the surfaces of the filaments 30 and the connecting rod 31.

The electrode 20 is cooled by a method such as water cooling to maintain a lower temperature than that of the filaments 30 in a process of manufacturing polysilicon. To this end, a channel (not illustrated) in which cooling water is circulated may be formed in the electrode 20.

The cover assembly 40 is installed at each of the plurality of electrodes 20 to cover and protect the electrode 20 in the process of manufacturing polysilicon. The cover assembly 40 is positioned between the substrate 11 and the electrode chuck 60, and separates the electrode 20 below the electrode chuck 60 from the inner space of the reaction chamber 10.

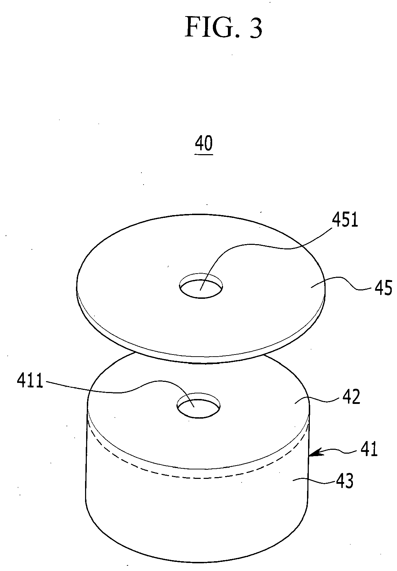

FIG. 3 is an exploded perspective view of a cover assembly illustrated in FIG. 2. Referring to FIGS. 2 and 3, the cover assembly 40 is configured by an electrode cover 41 surrounding the upper surface and the side of the electrode 20 on the substrate 11, and a cover shield 45 covering the upper surface of the electrode cover 41.

The electrode cover 41 may be configured by a horizontal cover 42 forming an opening 411 receiving the protrusion 22 and disposed on the upper surface of the electrode 20, and a cylindrical vertical cover 43 vertically connected with the horizontal cover 42 at an edge of the horizontal cover 42 and surrounding the flange 21 of the electrode 20 and the space ring 52.

The horizontal cover 42 may contact the upper surface of the electrode 20 or maintain a predetermined distance from the upper surface of the electrode 20, and the vertical cover 43 maintains a predetermined distance from the flange 21 of the electrode 20 and the space ring 52. In the case where the electrode cover 41 maintains a predetermined distance from the electrode 20, heat conductivity may be decreased.

The horizontal cover 42 and the vertical cover 43 may be integrally or separately configured. In the case of the separate type, the horizontal cover 42 and the vertical cover 43 are detachably assembled and may be individually replaced in a repairing process of the apparatus 100 for manufacturing polysilicon. In FIGS. 2 and 3, a separate-type electrode cover 41 is illustrated as an example.

The electrode cover 41 is formed by an insulator to maintain an insulated state from both the substrate 11 and the electrode 20. The electrode cover 41 has an excellent insulation property, does not influence the purity of polysilicon, and needs to be stable and easily processed at a high temperature (approximately 1000 °C to 1200 °C) in the reaction chamber 10.

By considering the contents, the electrode cover 41 may include any one of fused silica (SiO₂), silicon nitride (Si₃N₄), alumina (Al₂O₃), zirconia (ZrO₂), magnesia (MgO), and mullite (3Al₂O₃ · 2SiO₂).

In the process of manufacturing polysilicon, due to the electrode cover 41, polysilicon is not deposited on the electrode 20 and the surface of the space ring 52, and as a result, the insulation properties of the electrode 20 and the substrate 11 may be highly maintained. Further, in the related art, in order to reuse the electrode 20, a process (polysilicon etching process) of removing polysilicon attached to the electrode 20 may be omitted, and damage that may occur to the electrode 20 in the process may therefore be prevented.

The cover shield 45 is disposed on the electrode cover 41 to cover the upper surface of the electrode cover 41. The cover shield 45 forms an opening 451 in which the protrusion 22 is received, and may be formed in a disk shape having a larger diameter than the electrode cover 41.

The electrode cover 41, which is manufactured with the aforementioned material having a high insulation property and high stability at a high temperature, is a relatively expensive component, and when polysilicon is deposited on the surface of the electrode cover 41 due to an ambient temperature, a process of cleaning the electrode cover 41 after use is required. That is, the electrode cover 41 is not a consumable component but a reusable component, but the cleaning operation is required for reuse every time and a cost due to the cleaning is generated.

The cost of the cover shield 45 is lower than that of the electrode cover 41, and the cover shield 45 is made of a material which does not influence the purity of polysilicon. For example, the cover shield 45 may be formed with a carbon-based material including graphite. The cover shield 45 is formed in a disk shape having a larger diameter than the electrode cover 41 on the electrode cover 41, and polysilicon is deposited on the surface of the cover shield 45 instead of the electrode cover 41.

The cover shield 45 is replaced with a new cover shield 45 after being used as a consumable component, or may be used many times as long as the cover shield 45 does not influence the deposition of polysilicon. Due to the cover shield 45, the cleaning process of the electrode cover 41 may be omitted, and as a result, the maintenance costs of the apparatus 100 for manufacturing polysilicon may be largely reduced.

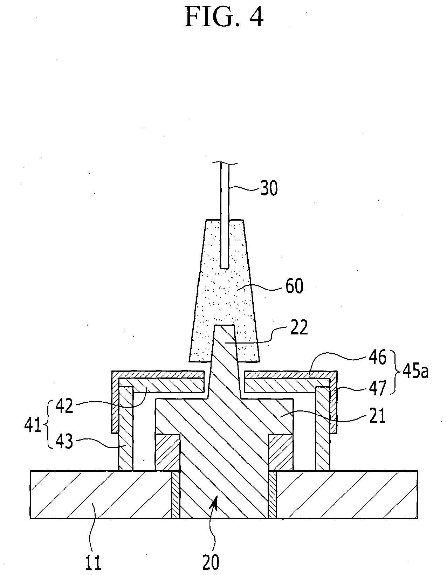

FIG. 4 is a partially enlarged view of an apparatus for manufacturing polysilicon according to a second exemplary embodiment of the present invention.

Referring to FIG. 4, an apparatus for manufacturing polysilicon of the second exemplary embodiment is formed by the same configuration as the first exemplary embodiment, except that a cover shield 45a is configured by a first shield 46 and a second shield 47. The same members as in the first exemplary embodiment use like reference numerals.

The first shield 46 forms an opening receiving the protrusion 22 and covers the upper surface of the horizontal cover 42. The second shield 47 is vertically connected with the first shield 46 at the edge of the first shield 46 to cover the outer surface of the vertical cover 43. The first shield 46 and the second shield 47 may be integrally configured.

The second shield 47 is positioned to be spaced apart from the substrate 11 so as to not be conducted with the substrate 11, and covers the upper portion of the vertical cover 43 having a high possibility of being deposited with polysilicon.

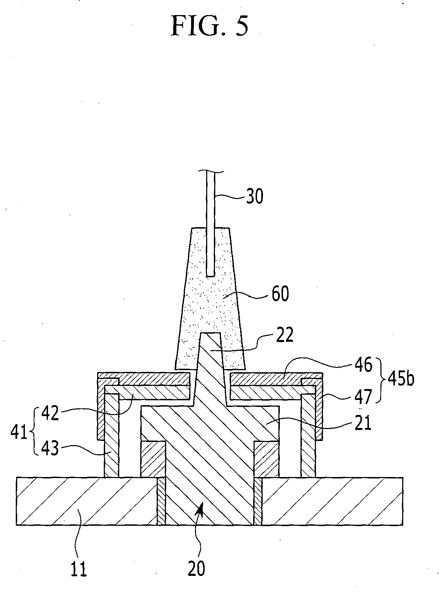

FIG. 5 is a partially enlarged view of an apparatus for manufacturing polysilicon according to a third exemplary embodiment of the present invention.

Referring to FIG. 5, an apparatus for manufacturing polysilicon of the third exemplary embodiment has the same configuration as the aforementioned second exemplary embodiment, except that the first shield 46 and the second shield 47 are separately configured. The same members as in the second exemplary embodiment use like reference numerals.

The first shield 46 and the second shield 47 are detachably assembled, and may be separately replaced after using a cover shield 45b. In the process of manufacturing polysilicon, more polysilicon may be deposited on the surface of the first shield 46 than the second shield 47, and in this case, only the first shield 46 is replaced after using the cover shield 45b to be assembled with the second shield 47.

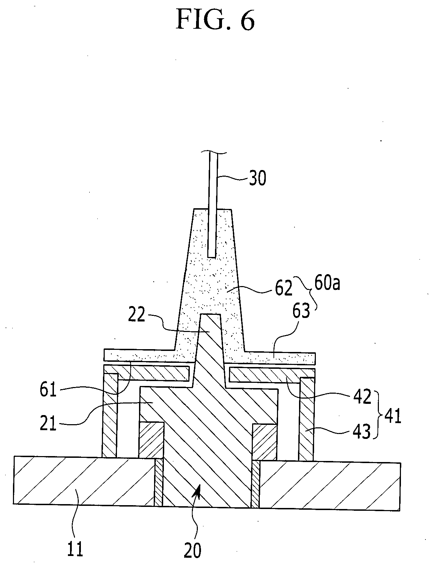

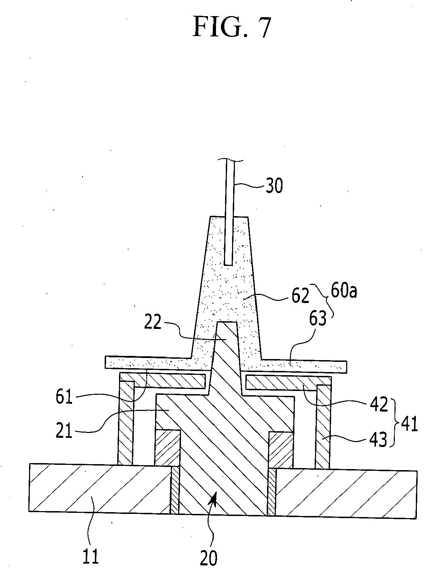

FIGS. 6 and 7 are partially enlarged views of an apparatus for manufacturing polysilicon according to a fourth exemplary embodiment of the present invention.

Referring to FIGS. 6 and 7, an apparatus for manufacturing polysilicon of the fourth exemplary embodiment is formed by the same configuration as the aforementioned first exemplary embodiment, except that the apparatus for manufacturing polysilicon has a structure in which an electrode chuck 60a covers the upper surface of the electrode cover 41 without a separate cover shield. The same members as in the first exemplary embodiment use like reference numerals.

The electrode chuck 60a includes a lower end 61 covering the upper surface of the electrode cover 41. That is, the lower end 61 of the electrode chuck 60a has a diameter which is equal to or larger than that of the electrode cover 41 to cover the upper surface of the electrode cover 41. In the fourth exemplary embodiment, the electrode chuck 60a includes a chuck part 62 fixing the end of the filament 30 and a shield part 63 connected below the chuck part 62 to cover the upper surface of the electrode cover 41.

The shield part 63 has a larger diameter than a maximum diameter of the chuck part 62, and has a diameter which is equal to or larger than that of the electrode cover 41 to cover the upper surface of the electrode cover 41. FIG. 6 illustrates a case where the diameter of the shield part 63 is equal to the diameter of the electrode cover 41, and FIG. 7 illustrates a case where the diameter of the shield part 63 is larger than the diameter of the electrode cover 41.

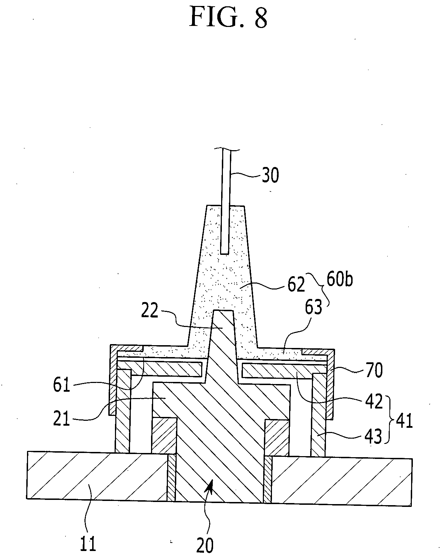

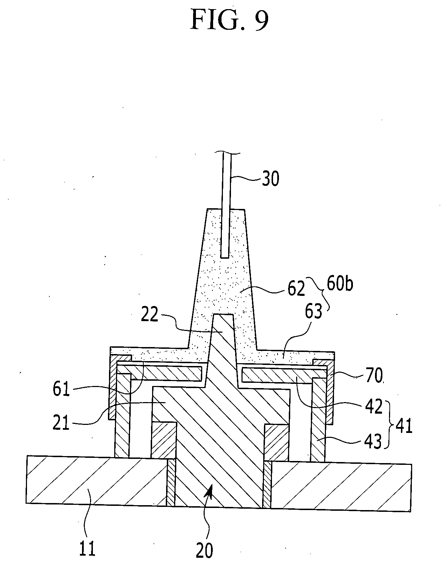

The electrode chuck 60a is generally made of a carbon-based material including graphite, and is replaced as the consumable component after using the apparatus 100 for manufacturing polysilicon or is used many times as long as the electrode chuck 60a does not influence the deposition of polysilicon. Accordingly, the cover shield is not manufactured as a separate component, but the shield part 63 may be integrally formed with the electrode chuck 60a. The configuration of the fourth exemplary embodiment may avoid the inconvenience of separately manufacturing the cover shield as compared with the first to third exemplary embodiments described above. FIGS. 8 and 9 are partially enlarged views of an apparatus for manufacturing polysilicon according to a fifth exemplary embodiment of the present invention.

Referring to FIGS. 8 and 9, an apparatus for manufacturing polysilicon of the fifth exemplary embodiment has the same configuration as the fourth exemplary embodiment described above, except that the apparatus for manufacturing polysilicon further includes an auxiliary shield 70. The same members as the fourth exemplary embodiment use like reference numerals.

The auxiliary shield 70 is vertically connected with the shield part 63 at the edge of the shield part 63 of an electrode chuck 60a to cover the outer surface of the vertical cover 43. The auxiliary shield 70 may be detachably assembled with the shield part 63, and in this case, the auxiliary shield 70 may be separately replaced. The auxiliary shield 70 may be made of graphite like the electrode chuck 60b.

The auxiliary shield 70 is positioned to be spaced apart from the substrate 11 so as to not be conductive with the substrate 11, and covers the upper portion of the vertical cover 43 having a high possibility of being deposited with polysilicon.

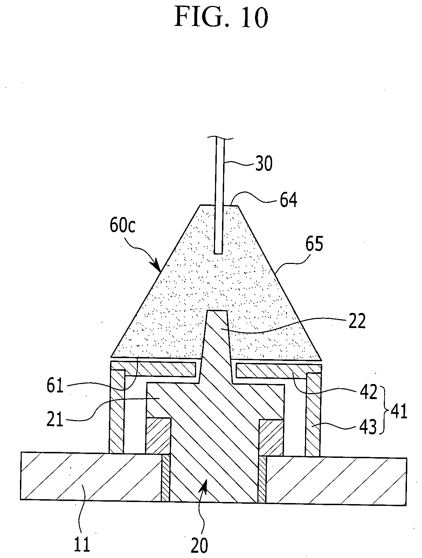

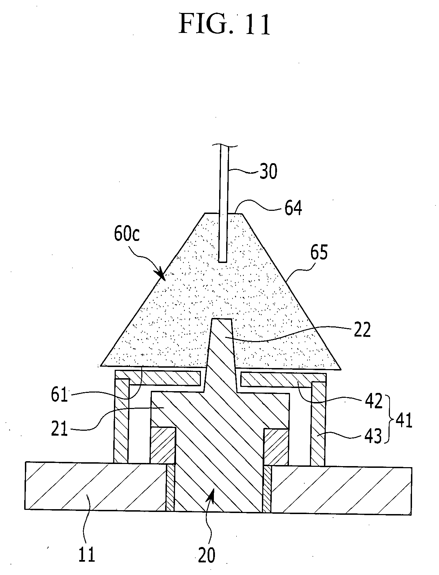

FIGS. 10 and 11 are partially enlarged views of an apparatus for manufacturing polysilicon according to a sixth exemplary embodiment of the present invention.

Referring to FIGS. 10 and 11, an apparatus for manufacturing polysilicon of the sixth exemplary embodiment has the same configuration as the fourth exemplary embodiment described above, except that an electrode chuck 60c has a single-slope side without dividing the chuck part and the shield part. The same members as in the fourth exemplary embodiment use like reference numerals.

The electrode chuck 60c includes an upper end 64 fixing the filaments 30, a lower end 61 coupled with the protrusion 22 of the electrode 20 to cover the upper surface of the electrode cover 41, and a single-slope side 65 connecting the upper end 64 and the lower end 61. The lower end 61 has a larger diameter than the upper end 64, and has a diameter which is equal to or larger than that of the electrode cover 41 to cover the upper surface of the electrode cover 41.

The electrode chuck 60c has a shape formed by removing a portion of a cone, and has a simple shape to be easily processed. FIG. 10 illustrates a case where the diameter of the lower end 61 of the electrode chuck 60c is equal to the diameter of the electrode cover 41, and FIG. 11 illustrates a case where the diameter of the lower end 61 of the electrode chuck 60c is larger than the diameter of the electrode cover 41.

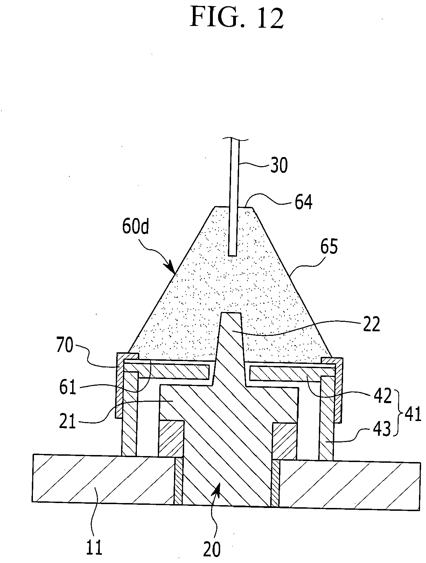

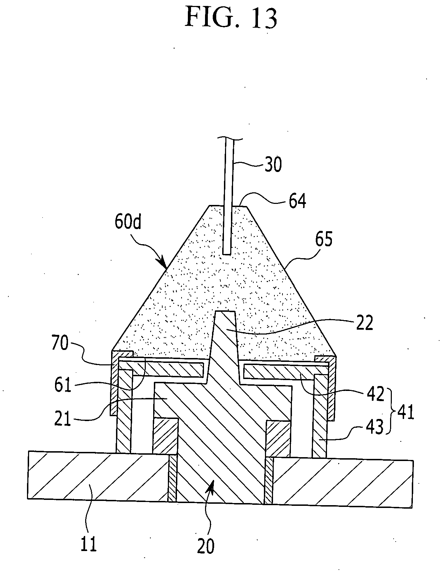

FIGS. 12 and 13 are partially enlarged views of an apparatus for manufacturing polysilicon according to a seventh exemplary embodiment of the present invention.

Referring to FIGS. 12 and 13, an apparatus for manufacturing polysilicon of the seventh exemplary embodiment has the same configuration as the sixth exemplary embodiment described above, except that the apparatus for manufacturing polysilicon further includes an auxiliary shield 70. The same members as in the sixth exemplary embodiment use like reference numerals.

The auxiliary shield 70 is vertically connected with an electrode chuck 60d at the edge of the lower end 61 of the electrode chuck 60d to cover the outer surface of the vertical cover 43. The auxiliary shield 70 may be detachably assembled with the electrode chuck 60d, and in this case, the auxiliary shield 70 may be separately replaced. The auxiliary shield 70 may be made of graphite like the electrode chuck 60d.

The auxiliary shield 70 is positioned to be spaced apart from the substrate 11 so as to not be conductive with the substrate 11, and covers the upper portion of the vertical cover 43 having a high possibility of being deposited with polysilicon.

According to the aforementioned exemplary embodiments, in the process of manufacturing polysilicon, due to the electrode cover 41, polysilicon is not deposited on the electrode 20 and the surface of the space ring 52, and as a result, the insulation properties of the electrode 20 and the substrate 11 may be highly maintained. In addition, the cover shields 45, 45a, and 45b or the lower ends of the electrode chucks 60a, 60b, 60c, and 60d cover the upper surface of the electrode cover 41 and thus the cleaning process of the electrode cover 41 may be omitted, and as a result, the maintenance costs of the apparatus 100 for manufacturing polysilicon may be largely reduced.

**<Description of symbols>**

| | |
|---|---|
| 100: Apparatus for manufacturing polysilicon | |
| 10: Reaction chamber | |
| 11: Substrate | 12: Reactor cover |
| 20: Electrode | 30: Filament |
| 40: Cover assembly | 41: Electrode cover |
| 45, 45a, 45b: Cover shield | 51: Bushing |
| 52: Space ring | |
| 60a, 60b, 60c, 60d: Electrode chuck | |

## Claims

1. An apparatus for manufacturing polysilicon, comprising:
a reaction chamber including a substrate and a reactor cover;
at least a pair of electrodes installed through the substrate by an insulating member and connected with a power supply;
at least a pair of filaments which are coupled with the pair of electrodes by an electrode chuck and of which upper ends are connected to each other; and
an electrode cover surrounding an upper surface and a side of the electrode on the substrate,
wherein the electrode chuck includes a lower end covering the upper surface of the electrode cover,
wherein the electrode cover includes any one selected from a group consisting of fused silica (SiO₂), silicon nitride (Si₃N₄), alumina (Al₂O₃), zirconia (ZrO₂), magnesia (MgO), and mullite (3Al₂O₃ · 2SiO₂), and
wherein the electrode chuck is made of carbon-based materials including graphite.

2. The apparatus of claim 1, wherein the electrode has a protrusion engaging with the electrode chuck formed on the upper surface; and the electrode cover includes a horizontal cover forming an opening receiving the protrusion and disposed on the upper surface of the electrode and a vertical cover vertically connected with the horizontal cover at the edge of the horizontal cover.

3. The apparatus of claim 2, wherein the horizontal cover and the vertical cover are configured separately such that they can be individually replaced.

4. The apparatus of any one of claims 1 to 3, wherein the electrode chuck includes a chuck part fixing the end of the filament and a shield part connected below the chuck part; and a diameter of the shield part is larger than a maximum diameter of the chuck part and equal to or larger than the diameter of the electrode cover.

5. The apparatus of claim 4, further comprising an auxiliary shield vertically connected with the shield part at the edge of the shield part to cover the outer surface of the vertical cover.

6. The apparatus of claim 5, wherein the auxiliary shield are made of carbon-based materials including graphite; and the auxiliary shield is detachably assembled with the shield part.

7. The apparatus of any one of claims 1 to 3, wherein the electrode chuck includes an upper end fixing the filaments, and a single-slope side connecting the upper end and the lower end; and a diameter of the lower end is equal to or larger than that of the electrode cover.

8. The apparatus of claim 7, further comprising an auxiliary shield vertically connected with the lower end at the edge of the lower end to cover the outer surface of the vertical cover.

9. The apparatus of claim 8, wherein the auxiliary shield are made of carbon-based materials including graphite; and the auxiliary shield is detachably assembled with the lower end.

## Patentansprüche

1. Vorrichtung zur Herstellung von Polysilicium, umfassend:
eine Reaktionskammer, die ein Substrat und eine Reaktorabdeckung einschließt;
mindestens ein Paar von Elektroden, die mit einem Isolierelement durch das Substrat eingebaut und an eine Stromversorgung angeschlossen sind;
mindestens ein Paar von Filamenten, die mit dem Paar von Elektroden über eine Elektrodenaufnahmevorrichtung verbunden sind und deren obere Enden miteinander verbunden sind;
und
eine Elektrodenabdeckung, die eine Oberseite und eine Seite der Elektrode auf dem Substrat umgibt,
wobei die Elektrodenaufnahmevorrichtung ein unteres Ende einschließt, das die Oberseite der Elektrodenabdeckung bedeckt,
wobei die Elektrodenabdeckung Eines ausgewählt aus einer Gruppe bestehend aus Quarzglas (SiO₂), Siliciumnitrid (Si₃N₄), Aluminiumoxid (Al₂O₃), Zirconiumoxid (ZrO₂), Magnesiumoxid (MgO) und Mullit (3Al₂O₃ · 2SiO₂) einschließt, und
wobei die Elektrodenaufnahmevorrichtung aus Werkstoffen auf Kohlenstoffbasis einschließlich Graphit gefertigt ist.

2. Vorrichtung nach Anspruch 1, wobei die Elektrode einen in die Elektrodenaufnahmevorrichtung eingreifenden Vorsprung aufweist, der an der Oberseite ausgebildet ist; und die Elektrodenabdeckung eine horizontale Abdeckung, die eine Öffnung bildet, die den Vorsprung aufnimmt, und an der Oberseite der Elektrode angeordnet ist, und eine vertikale Abdeckung, die am Rand der horizontalen Abdeckung vertikal mit der horizontalen Abdeckung verbunden ist, einschließt.

3. Vorrichtung nach Anspruch 2, wobei die horizontale Abdeckung und die vertikale Abdeckung separat vorgesehen sind, sodass sie einzeln ausgetauscht werden können.

4. Vorrichtung nach einem der Ansprüche 1 bis 3, wobei die Elektrodenaufnahmevorrichtung ein Aufnahmeteil, das das Ende des Filaments festhält, und ein unter dem Aufnahmeteil verbundenes Schutzteil einschließt; und ein Durchmesser des Schutzteils größer ist als ein Höchstdurchmesser des Aufnahmeteils und größer oder gleich des Durchmessers der Elektrodenabdeckung.

5. Vorrichtung nach Anspruch 4, ferner umfassend einen Hilfsschutz, der am Rand des Schutzteils vertikal mit dem Schutzteil verbunden ist und so die Außenfläche der vertikalen Abdeckung bedeckt.

6. Vorrichtung nach Anspruch 5, wobei der Hilfsschutz aus Werkstoffen auf Kohlenstoffbasis einschließlich Graphit gefertigt ist; und der Hilfsschutz lösbar an dem Schutzteil montiert ist.

7. Vorrichtung nach einem der Ansprüche 1 bis 3, wobei die Elektrodenaufnahmevorrichtung ein oberes Ende, das die Filamente festhält, und eine Seite mit einer einzigen Schräge, die das obere Ende mit dem unteren Ende verbindet, einschließt; und ein Durchmesser des unteren Endes größer oder gleich dem der Elektrodenabdeckung ist.

8. Vorrichtung nach Anspruch 7, ferner umfassend einen Hilfsschutz, der am Rand des unteren Endes vertikal mit dem unteren Ende verbunden ist und so die Außenfläche der vertikalen Abdeckung bedeckt.

9. Vorrichtung nach Anspruch 8, wobei der Hilfsschutz aus Werkstoffen auf Kohlenstoffbasis einschließlich Graphit gefertigt ist; und der zusätzliche Schutz lösbar an dem unteren Ende montiert ist.

## Revendications

1. Appareil de fabrication de polysilicium, comportant :
une chambre de réaction comprenant un substrat et un couvercle de réacteur ;
au moins une paire d'électrodes installées à travers le substrat par un élément isolant et reliées à une alimentation électrique ;
au moins une paire de filaments qui sont couplés à la paire d'électrodes par un mandrin d'électrodes et dont les extrémités supérieures sont reliées entre elles ; et
un couvercle d'électrodes entourant une surface supérieure et un flanc de l'électrode sur le substrat, le mandrin d'électrodes comprenant une extrémité inférieure recouvrant la surface supérieure du couvercle d'électrodes,
le couvercle d'électrodes comprenant un matériau quelconque choisi dans un groupe constitué de la silice (SiO₂) fondue, du nitrure de silicium (Si₃N₄), de l'alumine (Al₂O₃), du zircon (ZrO₂), de la magnésie (MgO) et de la mullite (3Al₂O₃ · 2SiO₂), et
le mandrin d'électrodes étant constitué de matériaux à base de carbone comprenant du graphite.

2. Appareil selon la revendication 1, l'électrode présentant une protubérance interagissant avec le mandrin d'électrodes formé sur la surface supérieure ; et le couvercle d'électrodes comprenant un couvercle horizontal formant une ouverture recevant la protubérance et disposée sur la surface supérieure de l'électrode et un couvercle vertical lié verticalement au couvercle horizontal au bord du couvercle horizontal.

3. Appareil selon la revendication 2, le couvercle horizontal et le couvercle vertical étant configurés séparément de telle façon qu'ils puissent être remplacés individuellement.

4. Appareil selon l'une quelconque des revendications 1 à 3, le mandrin d'électrodes comprenant une partie de mandrin fixant l'extrémité du filament et une partie d'écran liée au-dessous de la partie de mandrin ; et
un diamètre de la partie d'écran étant supérieur à un diamètre maximum de la partie de mandrin et supérieur ou égal au diamètre du couvercle d'électrodes.

5. Appareil selon la revendication 4, comportant en outre un écran auxiliaire lié verticalement à la partie d'écran au bord de la partie d'écran pour recouvrir la surface extérieure du couvercle vertical.

6. Appareil selon la revendication 5, l'écran auxiliaire étant constitué de matériaux à base de carbone comprenant du graphite ; et l'écran auxiliaire étant assemblé de façon détachable avec la partie d'écran.

7. Appareil selon l'une quelconque des revendications 1 à 3, le mandrin d'électrodes comprenant une extrémité supérieure fixant les filaments, et un flanc à pente unique reliant l'extrémité supérieure et l'extrémité inférieure ; et
un diamètre de l'extrémité inférieure étant supérieur ou égal à celui du couvercle d'électrodes.

8. Appareil selon la revendication 7, comportant en outre un écran auxiliaire lié verticalement à l'extrémité inférieure au bord de l'extrémité inférieure pour recouvrir la surface extérieure du couvercle vertical.

9. Appareil selon la revendication 8, l'écran auxiliaire étant constitué de matériaux à base de carbone comprenant du graphite ; et l'écran auxiliaire étant assemblé de façon détachable avec l'extrémité inférieure.
